# EUROPÄISCHE PATENTSCHRIFT

(11) **EP 1 829 598 B1**
(45) Veröffentlichungstag und Bekanntmachung des Hinweises auf die Patenterteilung: **20.08.2014**
(21) Anmeldenummer: 06124702.9
(22) Anmeldetag: 24.11.2006
(51) Int. Cl.: B01D 46/24, B01D 29/21

(54) **Gewickelter Filterkörper**
Wound filter body
Corps de filtration enroulé

(30) Priorität: 19.12.2005 DE 202005019909 U
(43) Veröffentlichungstag der Anmeldung: 05.09.2007
(73) Patentinhaber: MANN+HUMMEL GmbH, 71638 Ludwigsburg (DE)
(72) Erfinder: Lampert, Johannes, 82237 Wörthsee (DE); Pelz, Andreas, 70806 Kornwestheim (DE); Rohrmeier, Josef, 84082, Laberweinting (DE); Sieber, Thomas, 84163, Marklkofen (DE); Rieger, Mario, 71638, Ludwigsburg (DE)

(56) Entgegenhaltungen:
- EP-A1- 1 484 484
- CA-A1- 2 366 066
- DE-A1- 3 306 500
- DE-A1- 10 328 276
- US-A- 2 063 743
- US-A- 5 002 666

## Beschreibung

### Technisches Gebiet

Die Erfindung betrifft einen aus mehreren Filterlagen gewickelten Filterkörper.

### Stand der Technik

Insbesondere aus Papier gewickelte Filterkörper sind hinreichend bekannt, beispielsweise aus DE 10 328 276 und CA 2 366 066. Die EP 0 900 118 B1 offenbar zylinderförmige Filterkörper, deren Querschnittsflächen eine kreisförmige Umfangskontur aufweisen. Ferner offenbart die Druckschrift Filterkörper mit im Wesentlichen rechteckiger Umfangskontur, wobei jedoch die Ecken der Filterkörperquerschnittsflächen fertigungsbedingt abgerundet ausgebildet sind. Ferner ist es aus der EP 0 900 118 B1 bekannt, Filterkörper mit ovaler Umfangskontur zu fertigen. Allen bekannten Filterkörpern ist gemeinsam, dass sie eine positive, nach außen gewölbte Umfangskontur aufweisen.

### Offenbarung der Erfindung

### Technische Aufgabe

Der Erfindung liegt die Aufgabe zugrunde, eine alternative Bauform für einen Filterkörper vorzuschlagen, durch die der mögliche Einsatzbereich von Filterkörpern erweitert wird. Weiterhin besteht die Aufgabe darin, eine Vorrichtung sowie ein Verfahren zur Herstellung eines solchen Filterkörpers mit alternativer Bauform bereitzustellen.

### Technische Lösung

Diese Aufgabe wird durch einen Filterkörper mit den Merkmalen des Anspruchs 1, mit einer Vorrichtung mit den Merkmalen des Anspruchs 8 sowie mit einem Verfahren mit den Merkmalen des Anspruchs 15 gelöst. Vorteilhafte Ausgestaltungen der Erfindung sind in den Unteransprüchen angegeben.

Der Erfindung liegt der Gedanke zugrunde, dass der in der Regel säulenförmige Filterkörper eine von der Hüllkontur eines Filterkörperquerschnitts abweichende Umfangskontur aufweist, wobei die Umfangskontur mindestens einen eingezogenen Bereich umfasst. Anders ausgedrückt ist die Umfangskontur eines Filterkörperquerschnitts des Filterkörpers in einem Bereich negativ bzw. nach innen weisend ausgebildet. Die Umfangskontur weist erfindungsgemäß einen konkaven, d.h. nach innen gewölbten Umfangskonturabschnitt auf. Bei der Hüllkontur handelt es sich nicht um die tatsächliche Umfangskontur eines Filterkörperquerschnitts. Die Hüllkontur wird erhalten, wenn der Filterkörper mit einem flexiblen Element, beispielsweise mit einer Schnur umspannt wird. Der Schnurverlauf entspricht dann der Hüllkontur. Hinterschneidungen werden von der Hüllkontur mit geradlinigen Abschnitten ausgespart. Beispielsweise entspricht die Hüllkontur bei einem Kreis dessen Umfangskontur. Erfindungsgemäß ist nun vorgesehen, dass die tatsächliche Umfangskontur der Filterkörperquerschnittsfläche von dessen Hüllkontur abweicht und diese hinterschneidet, also wie erwähnt, einen negativen oder konkaven Umfangskonturabschnitt aufweist. Der negative Konturbereich kann als Anström- oder Verdichtungskammer für das zu filternde Medium dienen.

Mit den herkömmlichen Fertigungstechniken zur Herstellung eines Filterkörpers ist der erfindungsgemäße Filterkörper mit einem nach innen gewölbten Umfangskonturabschnitt nicht herstellbar, da die Filterlagen bestrebt sind, die Hüllkontur des Filterkörpers bzw. eines Filterkörperquerschnitts des Filterkörpers anzunehmen bzw. dieser zu folgen. Mittels der noch zu erläuternden erfindungsgemäßen Vorrichtung und mittels des ebenfalls noch zu erläuternden erfindungsgemäßen Verfahrens ist es erstmals möglich, die beschriebene alternative Bauform zu fertigen. Durch die erfindungsgemäße neue Bauform des Filterkörpers wird der Einsatzbereich von gewickelten Filterkörpern, die in der Regel als Inline-Filter eingesetzt werden, erheblich erweitert, da der erfindungsgemäß ausgeformte Filterkörper auch in komplex ausgeformten Bauräumen eingesetzt werden kann. Die gewickelten Filterkörper sind in der Regel zylinderförmig ausgebildet, weisen also eine beliebig geformte Querschnittsfläche und eine Mantelfläche auf, wobei die Mantelfläche parallel zu einer gedachten, die Querschnittsfläche schneidenden Geraden verläuft. Die übereinander angeordneten Filterkörperquerschnittsflächen sind dabei identisch ausgeformt. Die erfindungsgemäßen Filterkörper sind aber nicht auf zylindrische Formen mit identischen Filterkörperquerschnittsflächen beschränkt. Es ist beispielsweise denkbar, dass die Filterkörper in irgendeiner Weise säulenförmig, beispielsweise mit einer hyperbolisch geformten Mantelfläche, gewickelt sind.

Für eine Vielzahl von denkbaren Einsatzbereichen der erfindungsgemäßen Filterkörper ist es von Vorteil, wenn die Hüllkontur symmetrisch ausgebildet ist. Hierunter fallen grundsätzlich alle möglichen Symmetrien. Die Hüllkontur kann beispielsweise punktsymmetrisch zu einer Längsmittelachse ausgebildet sein. Weiterhin ist es denkbar, dass die Hüllkontur einer Filterkörperquerschnittsfläche zusätzlich oder alternativ spiegelsymmetrisch zu einer Querschnittsachse ausgebildet ist. Besonders vorteilhaft hat sich eine kreisförmige oder ovale Hüllkontur herausgestellt, von der die tatsächliche Umfangskontur durch mindestens einen nach innen weisenden bzw. eingezogenen Umfangskonturabschnitt abweicht.

Aus anwendungstechnischer Sicht besonders interessant ist es, wenn die Umfangskontur bananenförmig oder sichelförmig ausgebildet ist. Bei einer derartigen Ausbildung der Umfangskontur ist der konkave Umfangskonturabschnitt im Verhältnis zu dem konvex ausgebildeten Umfangskonturabschnitt relativ groß. Die zugehörige Hüllkontur weist in der Regel einen konvexen und einen geradlinigen Umfangsabschnitt auf. Je nach Ausbildung der Bananen- oder Sicherform kann die Hüllkontur näherungsweise oval sein.

Eine weitere, nicht erfindungsgemäße, Möglichkeit besteht darin, die Hüllkontor als Polygon, insbesondere mit abgerundeten Ecken, auszubilden. Die zugehörige Umfangskontur weicht von der polygonen Hüllkontur durch einen nach innen weisenden Umfangskonturabschnitt ab.

Zur Herstellung des erfindungsgemäßen Filterkörpers wird ein Stützkern benötigt, auf den die Filterlagen, insbesondere Filterpapier, aufgewickelt werden. Mit Vorteil entspricht die Form der Umfangskontur des Stützkerns zumindest im Wesentlichen der Form der Umfangskontur des fertigen Filterkörpers. In der Regel wird der Stützkern im Gegensatz zu dem fertigen Filterkörper spitze Ecken aufweisen. Durch das Umwickeln des Stützkerns mittels Filterlagen ergeben sich bei dem fertigen Filterkörper abgerundete Ecken.

Um den Zusammenhalt zwischen den Filterlagen zu gewährleisten, ist in Ausgestaltung vorgesehen, dass zwei benachbarte Filterlagen, vorzugsweise sämtliche benachbarte Filterlagen, miteinander verklebt sind. Wenn der Stützkern innerhalb des Filterkörpers verbleiben soll, kann die dem Stützkern benachbarte Filterlage ebenfalls mit diesem verleimt werden. Mit Vorteil erfolgt das Aufbringen von Klebstoff in Form von mindestens einer, vorzugsweise mindestens zwei Klebstoffspuren. In der Regel reicht es aus, wenn die Klebstoffspuren linienförmig und nicht großflächig ausgebildet sind.

Gegenstand der Erfindung ist, wie erläutert, auch eine Vorrichtung zur Herstellung eines erfindungsgemäßen Filterkörpers. Diese Vorrichtung weist eine Halteeinrichtung für einen Stützkern sowie eine Wickeleinrichtung zum Umwickeln des Stützkerns mit Filtermaterial auf. Der Stützkern muss relativ zu der Wickeleinrichtung drehbar sein. Dies kann entweder dadurch gewährleistet werden, dass der Stützkern, oder die Wickeleinrichtung drehbar angeordnet sind. Es ist auch denkbar, dass sowohl der Stützkern, als auch die Wickeleinrichtung gegeneinander verdrehbar angeordnet sind. Zur Herstellung bekannter Filterelemente mit ausschließlich positiver Umfangskontur reicht es aus, wenn das aufzuwickelnde Filtermaterial beim Wickelprozess unter einer gewissen Vorspannung gehalten wird, sodass es sich lagenweise gleichmäßig an den Stützkern anlegt. Da der zur Herstellung eines erfindungsgemäßen Filterkörpers zu verwendende Stützkern ebenfalls zumindest einen negativen Umfangskonturabschnitt aufweist, würde sich das Filtermaterial bei herkömmlichen Wickelvorrichtungen an die Hüllkontur des Stützkerns anlegen und nicht dem negativen Konturabschnitt folgen. Erfindungsgemäß ist vorgesehen, dass die Vorrichtung zur Herstellung des Filterkörpers mindestens eine Anpresseinrichtung, zum zumindest abschnittsweisen Andrücken des Filtermaterials an den Stützkern während des Wickelprozesses aufweist. Mit Hilfe der Anpresseinrichtung wird die oberste Lage des Filtermaterials an die darunter befindlichen Lagen angedrückt, sodass das Filtermaterial dem Umfangskonturverlauf des Stützkerns beim Aufwickelprozess folgt.

Um eine dauerhafte Verbindung zwischen den Filterlagen zu gewährleisten, ist mindestens eine Klebstoffaufbringeinrichtung vorgesehen, die Klebstoff, insbesondere Klebstoffbahnen, auf die Filterlagen aufbringt.

In Ausgestaltung der Erfindung ist vorgesehen, dass die Anpresseinrichtung mindestens einen auf der jeweils obersten Filterlage abrollenden Walzkörper umfasst. In der Regel dreht sich der Stützkern an dem senkrecht zum Stützkern verstellbaren Walzenkörper entlang. Es ist auch denkbar, dass der Stützkern drehfest angeordnet ist und der Walzenkörper zusammen mit der Wickeleinrichtung den Stützkern umfährt. Wesentlich ist, dass der Walzenkörper neben seiner Abrollbewegung eine Relativbewegung senkrecht zur Stützkernoberfläche vollführen kann. Dies kann selbstverständlich auch dadurch gewährleistet werden, dass der Stützkern senkrecht zum Walzenkörper bewegbar ist.

Um den Walzenkörper gegen den Stützkörper bzw. gegen die bereits aufgewickelten Filterlagen zu drücken, ist mindestens eine Feder vorgesehen, die den Walzenkörper in Richtung Stützkern kraftbeaufschlagt.

Zusätzlich oder alternativ zu der Federkraftbeaufschlagung kann ein Antrieb für den Walzenkörper zur Realisierung der senkrechten Relativbewegung zwischen Stützkern und Walzenkörper vorgesehen werden. Mit Vorteil ist dieser Antrieb dem Walzenkörper zugeordnet. Denkbar ist jedoch auch eine Verstellung des Stützkörpers mittels des Antriebs. Insbesondere eignet sich eine Kolben-Zylinder-Einheit oder ein elektromotorischer Antrieb zur Gewährleistung der senkrechten Relativbewegung.

Zur Steuerung des Antriebs ist in Ausgestaltung der Erfindung eine Steuereinheit vorgesehen.

Zur Steuerung der Relativbewegung zwischen Walzenkörper und Stützkörper gibt es mehrere Möglichkeiten. So ist es beispielsweise möglich, den Konturverlauf des Stützkerns in einem Speicher zu hinterlegen, sodass die Steuerung der Relativbewegung und des Anpressdrucks in Abhängigkeit vom Drehwinkel des Stützkerns sowie der Anzahl der erfolgten Umdrehungen und/oder des Abstandes zu dem Walzenkörper erfolgt.

Ebenso ist es denkbar, dass der Konturverlauf über einen Sensor, mit Vorteil kontinuierlich, erfasst wird und dass die Steuerung anhand des gemessenen Konturverlaufs und der Relativposition zwischen Walzenkörper und Stützkern erfolgt. Diese Relativposition wird ebenfalls über einen Sensor gemessen und die gemessene Information der Steuereinheit zugeführt.

Mittels der Steuereinheit kann sichergestellt werden, dass die von dem Walzenkörper auf die oberste Lage aufgebrachte Anpresskraft zumindest näherungsweise konstant bleibt.

Gegenstand der Erfindung ist auch ein Herstellungsverfahren. Das Herstellungsverfahren zeichnet sich dadurch aus, dass die Filterlagen während des Wickelprozesses, zumindest im Bereich des hinterschneidenden Umfangskonturabschnitts, an den Stützkörper angedrückt werden. Hierzu kann insbesondere eine Anpresseinrichtung mit Walzenkörper verwendet werden.

Wie zuvor erwähnt, ist es von Vorteil, wenn zumindest zwei benachbarte Filterlagen miteinander verklebt werden. Damit sich der fertig gewickelte und verklebte Filterkörper beim Aushärten des Klebstoffs nicht verzieht, ist erfindungsgemäß vorgesehen, den fertig gewickelten Filterkörper in eine zumindest annähernd starre Hülle zu überführen. Dabei ist es von Vorteil, wenn die Innenkontur der Hülle der Umfangskontur des fertig gewickelten Filterkörpers entspricht. Es ist jedoch auch denkbar, die Hülle derart auszubilden, dass die Innenkontur der Hülle von der Umfangskontur des fertig gewickelten Filterkörpers abweicht, um beispielsweise Formkorrekturen oder Formoptimierungen nach Beendigung des Wickelprozesses vor dem endgültigen Aushärten des Klebstoffs vornehmen zu können.

Es ist denkbar, den Stützkern nach dem Aushärten des Klebstoffs zu entfernen. Hierdurch kann das Gewicht des Filterkörpers reduziert werden.

### Kurze Beschreibung der Zeichnungen

Weitere Vorteile und zweckmäßige Ausführungen sind den weiteren Ansprüchen, zu entnehmen.

### Ausführungsform(en) der Erfindung

Der Filterkörper weist zwei beabstandete Grundflächen auf, die mittels einer senkrecht zu diesen angeordneten Mantelfläche miteinander verbunden sind. Die Grundflächen entsprechen der Filterkörperquerschnittsfläche . Die Umfangskontur der Grundflächen sowie der Filterkörperquerschnittsfläche ist im Wesentlichen U-förmig ausgebildet. Die Hüllkontur des Filterkörpers ist dagegen im Wesentlichen rechteckförmig ausgebildet. Ein Umfangskonturabschnitt der Umfangskontur ist gegenüber der Hüllkontur nach innen eingebogen. Anders ausgedrückt hinterschneidet die Umfangskontur in dem Umfangskonturabschnitt die Hüllkontur der Filterkörperquerschnittsfläche . Hierdurch wird ein Filterkörper mit einem negativen Umfangskonturabschnitt erhalten. Der von dem Umfangskonturabschnitt hinterschnittene, gestrichelt dargestellte Abschnitt der Umfangskontur weist einen geradlinigen Verlauf auf.

Innerhalb des mittels mehren Filterlagen gewickelten Wickelbereichs des Filterkörpers befindet sich ein starrer Stützkörper . Die Umfangskontur des Stützkörpers entspricht im Wesentlichen der maßstabsgetreu verkleinerten Umfangskontur des fertig gewickelten Filterkörpers .

Es ist auch eine bananenförmige Filterkörperquerschnittsfläche vorgesehen. Die Umfangskontur der Filterkörperquerschnittsfläche hinterschneidet in einem konkaven Bereich die in diesem Bereich gerade Hüllkontur der Filterkörperquerschnittsfläche .

Die Umfangskontur des zentrisch angeordneten Stützkörpers ist ebenfalls bananenförmig ausgebildet. In diesem Ausführungsbeispiel bildet der konkave Bereich eine Anströmkammer für das anströmende Fluid.

Es ist auch eine Vorrichtung zur Herstellung eines Filterkörpers mit einem zentralen Stützkern und einem auf diesen aufgewickelten, mehrlagigen Wickelbereich vorgesehen. Der Stützkern ist von einer Halteeinrichtung gehalten. Mittels der Halteeinrichtung ist der Stützkern im Uhrzeigersinn drehbar. Mittels einer Anpresseinrichtung , umfassend einen Walzenkörper , der von einer Feder in Richtung Walzenkörper kraftbeaufschlagt ist, wird die oberste Filterlage gegen die bereits aufgewickelten Filterlagen gedrückt. Hierdurch wird gewährleistet, dass die oberste Filterlage nicht dem Hüllkonturverlauf folgt, sondern eine der Form des Stützkerns entsprechende, bananenförmige Umfangskontur erhält. In dem Ausführungsbeispiel ist der Walzenkörper relativ und senkrecht zur Oberfläche der obersten Filterlage bewegbar. Die oberste Filterlage wird von einer sich abwickelnden Filterlagenrolle abgerollt. In dem Ausführungsbeispiel sind die Anpresseinrichtung sowie die Filterlagenrolle ortsfest angeordnet. Die Relativbewegung findet allein durch Verdrehen des Stützkerns im Uhrzeigersinn statt.

Gemäß einem Ausführungsbeispiel können mehrere Sensoren und eine Steuereinheit vorgesehen werden, wobei ein Sensor den vorherrschenden Anpressdruck misst. Ein weiterer Sensor bestimmt den Konturverlauf im Bereich vor der Walze , sodass die Steuereinrichtung die Bewegung der Walze und/oder des Stützkörpers über Antriebe in Abhängigkeit der gemessenen Parameter steuern kann.

## Patentansprüche

1. Aus mehreren Filterlagen gewickelter Filterkörper, welcher eine Filterkörperquerschnittsfläche mit einer Hüllkontur aufweist, wobei die Hüllkontur der Filterkörperquerschnittsfläche derart definiert ist, dass die Hüllkontur dem Verlauf eines flexiblen Elementes entspricht, wenn das flexible Element den Filterkörper umspannt, **dadurch gekennzeichnet, dass** die Umfangskontur der Filterkörperquerschnittsfläche des Filterkörpers mindestens einen die Hüllkontur der Filterkörperquerschnittsfläche hinterschneidenden Umfangskonturabschnitt aufweist, derart dass die Umfangskontur der Filterkörperquerschnittsfläche sichel- oder U-förmig ist.

2. Filterkörper nach Anspruch 1, **dadurch gekennzeichnet, dass** die Hüllkontur einen geradelinigen Hüllkonturabschnitt aufweist.

3. Filterkörper nach einem der vorhergehenden Ansprüche, **dadurch gekennzeichnet, dass** die Hüllkontur näherungsweise oval ist.

4. Filterkörper nach einem der vorhergehenden Ansprüche, **dadurch gekennzeichnet, dass** der Filterkörper einen Stützkern aufweist.

5. Filterkörper nach einem der vorhergehenden Ansprüche, **dadurch gekennzeichnet, dass** zwei benachbarte Filterlagen miteinander verklebt sind.

6. Vorrichtung zur Herstellung eines Filterkörpers nach einem der vorhergehenden Ansprüche, mit einer Halteeinrichtung für einen Stützkern, und mit einer Wickeleinrichtung zum Umwickeln des Stützkerns mit Filtermaterial, **dadurch gekennzeichnet, dass** eine Anpresseinrichtung zum, zumindest abschnittsweisen, Andrückern des Filtermaterials an den Stützkern, dessen Umfangskonturform zumindest im Wesentlichen der Form des fertigen Filterkörpers entspricht, während des Wickelprozesses vorgesehen ist.

7. Vorrichtung nach Anspruch 6, **dadurch gekennzeichnet, dass** eine Klebstoffaufbringeinrichtung vorgesehen ist.

8. Vorrichtung nach einem der Ansprüche 6 oder 7, **dadurch gekennzeichnet, dass** die Anpresseinrichtung mindestens einen auf der jeweils obersten Filterlage abrollenden Walzenkörper umfasst.

9. Vorrichtung nach Anspruch 8, **dadurch gekennzeichnet, dass** der Walzenkörper federkraftbeaufschlagt ist.

10. Vorrichtung nach einem der Ansprüche 6 bis 9, **dadurch gekennzeichnet, dass** ein aktiver Antrieb, insbesondere eine Kolben-Zylinder-Einheit oder ein elektromotorischer Antrieb, zum Verfahren des Walzenkörpers relativ zur Stützkernoberfläche vorgesehen ist.

11. Vorrichtung nach Anspruch 10, **dadurch gekennzeichnet, dass** eine Steuereinheit zur Steuerung des aktiven Antriebs vorgesehen ist.

12. Vorrichtung nach Anspruch 11, **dadurch gekennzeichnet, dass** ein Sensor zur Bestimmung des Umfangskonturverlaufs des Stützkerns vorgesehen ist, und dass die Steuereinheit die Bewegung des aktiven Antriebs in Abhängigkeit von dem Umfangskonturverlauf des Stützkerns steuernd ausgebildet ist.

13. Verfahren zum Herstellen eines Filterkörpers nach einem der Ansprüche 1 bis 5 **dadurch gekennzeichnet, dass** die Filterlagen während des Wickelprozesses, zumindest im Bereich des hinterschneidenden Umfangskonturabschnitts, an einen Stützkern angedrückt werden.

14. Verfahren nach Anspruch 13, **dadurch gekennzeichnet, dass** die Filterlagen miteinander verklebt werden.

15. Verfahren nach Anspruch 14, **dadurch gekennzeichnet, dass** der gewickelte Filterkörper zum Aushärten des Klebstoffs in eine formgebende Hülle überführt wird.

16. Verfahren nach Anspruch 15, **dadurch gekennzeichnet, dass** der Stützkern, insbesondere nach dem zumindest teilweise Aushärten des Klebstoffs, entfernt wird.

## Claims

1. Filter body wound from a plurality of filter layers, which features a filter body's cross-sectional surface with a casing contour, the casing contour of the filter body's cross-sectional surface being defined in such a way that the casing contour corresponds to the extension of a flexible element when the flexible element envelopes the filter body, **characterized in that** the circumferential contour of the filter body's cross-sectional surface of the filter body features at least one circumferential contour section undercutting the casing contour of the filter body's cross-sectional surface in such a way that the circumferential contour of the filter body's cross-sectional surface is sickle-shaped or U-shaped.

2. Filter body according to claim 1, **characterized in that** the casing contour features a straight casing contour section.

3. Filter body according to one of the above claims, **characterized in that** the casing contour is approximately oval.

4. Filter body according to one of the above claims, **characterized in that** the filter body features a support core.

5. Filter body according to one of the above claims, **characterized in that** two adjacent filter layers are glued with each other.

6. Apparatus for manufacturing a filter body according to one of the above claims, with a holding appliance for a support core, and with a wrapping device for wrapping the support core with filter material, **characterized in that** a pressing device for pressing, at least sectionwise, the filter material against the supporting core, the circumferential contour shape of which corresponds at least substantially to the shape of the finished filter body, is provided during the wrapping process.

7. Apparatus according to claim 6, **characterized in that** an adhesive applicator is provided.

8. Apparatus according to one of the claims 6 or 7, **characterized in that** the pressing device comprises at least one roller body rolling on the respective uppermost filter layer.

9. Apparatus according to claim 8, **characterized in that** the roller body is activated by spring force.

10. Apparatus according to one of the claims 6 to 9, **characterized in that** an active drive, in particular a piston-cylinder unit or an electromotive drive, to move the roller body relative to the support core surface is provided.

11. Apparatus according to claim 10, **characterized in that** a control unit for controlling the active drive is provided.

12. Apparatus according to claim 11, **characterized in that** a sensor is provided to determine the circumferential contour profile of the support core, and that the control unit is designed to control the movement of the active drive depending on the circumferential contour profile of the support core.

13. Method for manufacturing a filter body according to one of the claims 1 to 5, **characterized in that** the filter layers are pressed during the wrapping process, at least in the area of the undercutting circumferential contour section, against a support core.

14. Method according to claim 13, **characterized in that** the filter layers are glued with each other.

15. Method according to claim 14, **characterized in that** the wound filter body is transferred into a shaping envelope for curing of the adhesive.

16. Method according to claim 15, **characterized in that** the support core, in particular after the at least partially hardening of the adhesive, is removed.

## Revendications

1. Corps de filtre composé de plusieurs couches filtrantes enroulées, lequel comporte une surface de section transversale du corps de filtre avec un contour d'enveloppe, le contour d'enveloppe de la surface de section transversale du corps de filtre étant défini de telle manière que le contour d'enveloppe corresponde à l'évolution d'un élément flexible lorsque cet élément flexible enveloppe le corps de filtre, **caractérisé en ce que** le contour circonférentiel de la surface de section transversale du corps de filtre présente au moins une section de contour circonférentiel formant une contre-dépouille du contour d'enveloppe de la surface de section transversale du corps de filtre, de sorte que le contour circonférentiel de la surface de section transversale du corps de filtre soit en forme de croissant ou de U.

2. Corps de filtre selon la revendication 1, **caractérisé en ce que** le contour d'enveloppe présente une section de contour d'enveloppe rectiligne.

3. Corps de filtre selon l'une des revendications précédentes, **caractérisé en ce que** le contour d'enveloppe est à peu près ovale.

4. Corps de filtre selon l'une des revendications précédentes, **caractérisé en ce que** le corps de filtre présente un noyau d'appui.

5. Corps de filtre selon l'une des revendications précédentes, **caractérisé en ce que** deux couches filtrantes adjacentes sont collées l'une à l'autre.

6. Dispositif de fabrication d'un corps de filtre selon l'une des revendications précédentes, avec un dispositif de retenue pour un noyau d'appui, et avec un dispositif d'enroulement pour envelopper le noyau d'appui de matériau filtrant, **caractérisé en ce qu'**un dispositif de pression permettant de presser, au moins partiellement, le matériau filtrant sur le noyau d'appui et dont la forme du contour circonférentiel correspond, au moins essentiellement, à la forme du corps de filtre fini est prévu lors du processus d'enroulement.

7. Dispositif selon la revendication 6, **caractérisé en ce qu'**un dispositif applicateur de colle est prévu.

8. Dispositif selon l'une des revendications 6 ou 7, **caractérisé en ce que** le dispositif de pression comprend au moins un corps de cylindre roulant sur la couche filtrante supérieure.

9. Dispositif selon la revendication 8, **caractérisé en ce que** le corps de cylindre est actionné par ressort.

10. Dispositif selon l'une des revendications 6 à 9, **caractérisé en ce qu'**un entraînement actif, notamment une unité à piston et vérin ou un entraînement commandé par moteur électrique est prévu/e pour déplacer le cylindre par rapport à la surface du noyau d'appui.

11. Dispositif selon la revendication 10, **caractérisé en ce qu'**une unité de commande permettant de piloter l'entraînement actif est prévue.

12. Dispositif selon la revendication 11, **caractérisé en ce qu'**un capteur permettant de déterminer l'évolution du contour circonférentiel du noyau d'appui est prévu et que l'unité de commande est exécutée de manière à piloter le mouvement de l'entraînement actif en fonction de l'évolution du contour circonférentiel du noyau d'appui.

13. Procédé de fabrication d'un corps de filtre selon l'une des revendications 1 à 5, **caractérisé en ce que** les couches filtrantes sont pressées, pendant le processus d'enroulement, contre le noyau d'appui, au moins dans la zone de la section de contour circonférentiel formant la contre-dépouille du contour d'enveloppe.

14. Procédé selon la revendication 13, **caractérisé en ce que** les couches filtrantes sont collées les unes aux autres.

15. Procédé selon la revendication 14, **caractérisé en ce que** le corps de filtre enroulé est placé dans une enveloppe de mise en forme pour faire durcir la colle.

16. Procédé selon la revendication 15, **caractérisé en ce que** le noyau d'appui est retiré, en particulier après le durcissement au moins partiel de la colle.
